# NEUE EUROPÄISCHE PATENTSCHRIFT

(11) **EP 1 222 088 B2**
(45) Veröffentlichungstag und Bekanntmachung des Hinweises auf die Entscheidung über den Einspruch: **16.09.2009**
(45) Hinweis auf die Patenterteilung: 29.10.2003
(21) Anmeldenummer: 01980312.1
(22) Anmeldetag: 31.08.2001
(51) Int. Cl.: B60N 2/015

(54) **FAHRZEUGSITZ MIT PACKAGESTELLUNG**
VEHICLE SEAT COMPRISING A PACKAGE POSITION
SIEGE DE VEHICULE COMPRENANT UNE POSITION RABATTUE

(30) Priorität: 14.09.2000 DE 10045474
(43) Veröffentlichungstag der Anmeldung: 17.07.2002
(73) Patentinhaber: KEIPER GmbH & Co. KG, 67657 Kaiserslautern (DE)
(72) Erfinder: KÄMMERER, Joachim, D-67663 Kaiserslautern (DE)
(74) Vertreter: Patentanwälte Hosenthien-Held und Dr. Held
(86) Internationale Anmeldenummer: PCT/EP2001/010058
(87) Internationale Veröffentlichungsnummer: WO 2002/022391

(56) Entgegenhaltungen:
- WO-A-01/19640
- DE-A- 19 533 932
- DE-C- 699 589
- DE-C1- 19 607 060
- ES-A- 2 147 090
- GB-A- 2 095 984
- US-A- 4 736 985
- PATENT ABSTRACTS OF JAPAN vol. 005, no. 039 (M-059), 14. März 1981 (1981-03-14) -& JP 55 164532 A (MITSUI MINING & SMELTING CO LTD;OTHERS: 01), 22. Dezember 1980 (1980-12-22)

## Beschreibung

Die Erfindung betrifft einen Fahrzeugsitz, insbesondere einen Kraftfahrzeugsitz, mit den Merkmalen des Oberbegriffs des Anspruches 1.

Die zweiten und/oder dritten Sitzreihen von Multifunktionsfahrzeugen (MPV), wie beispielsweise Vans oder Großraumlimousinen, sind in der Regel so ausgestaltet, daß der Innenraum variabel auf einen Personen- oder Gütertransport einstellbar ist. Aus der DE 44 39 975 A1 ist beispielsweise ein Fahrzeugsitz mit einer sogenannten Packagestellung bekannt, für deren Erreichen die Lehne auf das Sitzkissen geklappt wird und dann nach dem Lösen des hinteren Fußes der gesamte Fahrzeugsitz um etwa 90° nach vorne geklappt wird, so daß eine große Ladefläche entsteht. Bei einer solchen Lösung kann aber beispielsweise das Problem auftreten, daß vor Erreichen der Packagestellung die Kopfstütze in Kontakt mit dem Fahrzeugboden kommt und ein weiteres Vorklappen verhindert. Außerdem läßt die Bedienung mit zahlreichen Handgriffen noch Wünsche offen.

Die US 4,736,985 A zeigt einen an einer Stufe der Fahrzeugstruktur angeordneten Fahrzeugsitz der eingangs genannten Art, dessen Sitzkissen beim Übergang in die Packagestellung um eine im mittleren bis hinteren Sitzkissenbereich angeordnete Achse nach unten klappt, während die am Sitzkissen angelenkte Rückenlehne zugleich eine Versatzbewegung nach vorne ausführt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Zum Übergang von der Sitzstellung in die Packagestellung, nach dem Lösen der entsprechenden Füße, vollführt die Rückenlehne eine Versatzbewegung in Richtung des Sitzkissens, welche zumindest näherungsweise ohne Neigungsänderung der Rückenlehne erfolgt, wird ein Anschlagen der Rückenlehne oder deren Kopfstütze am Fahrzeugboden vermieden, in der Regel auch ein Anschlagen am Fahrzeughimmel. In üblicher Ausrichtung des Fahrzeugsitzes werden die Füße hinten gelöst und die Rückenlehne nach vorne versetzt, wobei eine am in Ruhe bleibenden vorderen Fuß angelenkte erste Koppel als Schwenkarm für den hinteren Fuß dient. Die erfindungsgemäße Lösung ist sowohl für Beifahrersitze als auch für die zweite Sitzreihe und gegebenenfalls vorhandene weitere Sitzreihen geeignet.

Während der Versatzbewegung der Rückenlehne klappt das Sitzkissen mit einer Schwenkbewegung hoch, d.h. bei üblicher Ausrichtung des Fahrzeugsitzes nach vorne hoch, ohne daß es dabei die Rückenlehne tragen muß. Die Schwenkachse ist im vorderen Bereich des Sitzkissenträgers vorgesehen. Das Hochklappen schafft Platz für den Versatz der Rückenlehne nach vorne und ist zugleich platzsparend, da zwei Fahrzeugsitze in der Packagestellung hintereinander angeordnet werden können. Dabei weisen vorzugsweise die Flächen von Sitzkissen und Rückenlehne, welche in der Sitzstellung dem Benutzer zugewandt sind, also die Polsterflächen, in der Packagestellung zumindest näherungsweise in die gleiche Richtung, d.h. in der Regel nach vorne, so daß sie durch den Fahrzeugsitz in der vorderen Sitzreihe gleichzeitig geschützt sind.

Die Bewegungen der Rückenlehne und des Sitzkissens zwischen der Sitzstellung und der Packagestellung sind durch Kopplungsmittel gekoppelt. Dies ermöglicht eine Einhandbedienung über den ganzen Weg, also einen leichten Übergang in die Packagestellung ("Easy-Package"), da dann automatisch das Sitzkissen und die Rückenlehne gemeinsam in die verschiedenen Stellungen überführt werden können. Eine solche Ausgestaltung mit vereinfachter Bedienung ist ideal für dreireihige Sitzanordnungen, da der Insasse der dritten Sitzreihe dann, nachdem er selber die erfindungsgemäß ausgestaltete zweite Sitzreihe in die Packagestellung bewegt hat, leicht aussteigen kann. Hierfür ist eine zweite Koppel vorgesehen, welche bei Betätigung der Rückenlehne das Schwenken des Sitzkissens bewirkt. Über die zweite Koppel kann bei einem Vorschwenken der Rückenlehne auch das Sitzkissen in eine flache Nichtgebrauchsstellung gebracht werden, insbesondere bei Anlenkung des Sitzkissensträgers mittels eines Viergelenks.

Die genannte Kopplung kann beispielsweise durch eine Schlitz-Zapfen-Führung erfolgen, welche eine Bahn mit einem einzigen Freiheitsgrad definiert und zugleich dem Toleranzausgleich dienen kann. Die Schlitz-Zapfen-Führung kann prinzipiell zwischen zwei beliebigen Bauteilen aller bewegten Bauteile vorgesehen sein. Die Definition der Bahn kann auch durch das Zusammenwirken mehrerer Koppeln erfolgen. Eine Gasfeder, welche die Schwenkbewegung des Sitzkissens unterstützt, kann den Kraftaufwand für den Übergang in die Packagestellung gering halten.

In bevorzugter Ausführung ist der Fahrzeugsitz in verschiedenen Sitzlängspositionen mit der Fahrzeugstruktur verbindbar und wahlweise vollständig entnehmbar, indem alle Füße lösbar sind und verschiedene Befestigungsmöglichkeiten an der Fahrzeugstruktur vorgesehen sind oder gegeneinander verschiebbare Sitzschienen bekannter Bauart zur Anbindung der Füße dienen.

Es ist von Vorteil, wenn in der Packagestellung eine Sicherung den Fahrzeugsitz festlegt, und zwar vorzugsweise automatisch, d.h. ohne weiteres Zutun des Bedieners. Die Insassen sind dann in Crashfällen besser vor der Ladung geschützt, und der Fahrzeugsitz verläßt nicht unbeabsichtigt die Packagestellung. In bevorzugter Ausführung weisen die im Bereich der Rückenlehne vorhandenen Füße Befestigungsmittel auf, welche sowohl zum Befestigen der Füße an der Fahrzeugstruktur als auch zur Sicherung der Packagestellung dienen. Solche Befestigungsmittel mit zwei Funktionen verringern die Herstellungskosten. Beispielsweise kann eine Klinke vorgesehen sein, die bei zwei unterschiedlich angeordneten Bolzen einhaken kann, oder umgekehrt kann ein Bolzen mit zwei Klinken zusammenwirken. Vorzugsweise werden die hinteren Füße mit den vorderen Füßen verriegelt, so daß der Fahrzeugsitz eine kompakte Form einnimmt und leicht entnommen werden kann. Je nach Einsatzzweck des Fahrzeugsitzes kann dessen bewegliches Sitzgestell (Kinematik) auch durch ein Lehnenschloß verriegelt werden, wobei dann die automatische Packagesicherung entfällt.

Vorzugsweise ist ein einziges Bedienelement zur Auslösung des Übergangs in die Packagestellung und zur Auslösung der Rückkehr in die Sitzstellung vorgesehen, was die Bedienung des Fahrzeugsitzes vereinfacht. Dieses Bedienelement entriegelt dann das bifunktionale Befestigungsmittel. Das Bedienelement ist beispielsweise im Bereich der Oberkante der Rückenlehne gut zugänglich angeordnet.

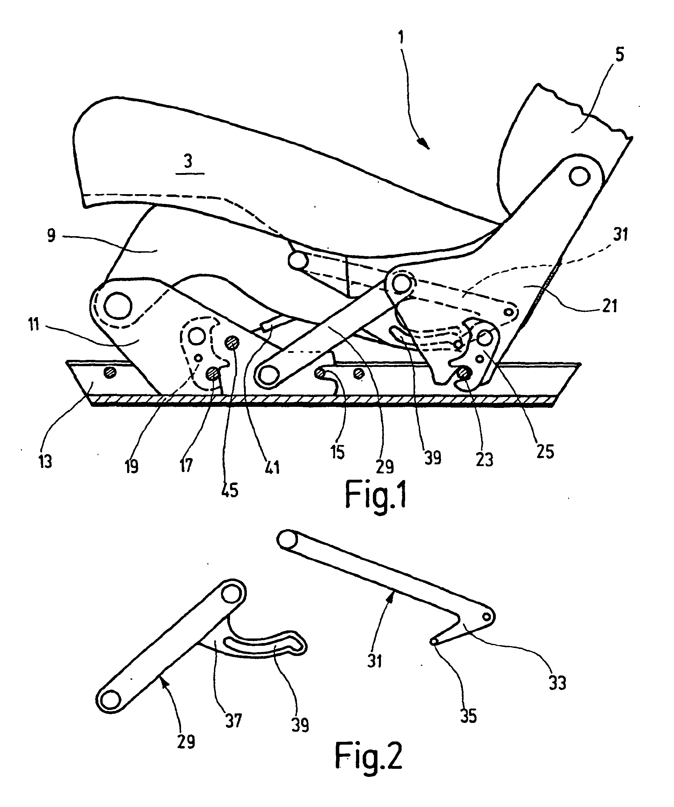

Im folgenden ist die Erfindung anhand dreier in der Zeichnung dargestellten Ausführungsbeispiele mit Abwandlungen näher erläutert. Es zeigen
- Fig. 1: eine teilweise geschnittene Seitenansicht des ersten Ausführungsbeispiels in der Sitzstellung,
- Fig. 2: eine Ansicht der beiden Koppeln des ersten Ausführungsbeispiels,

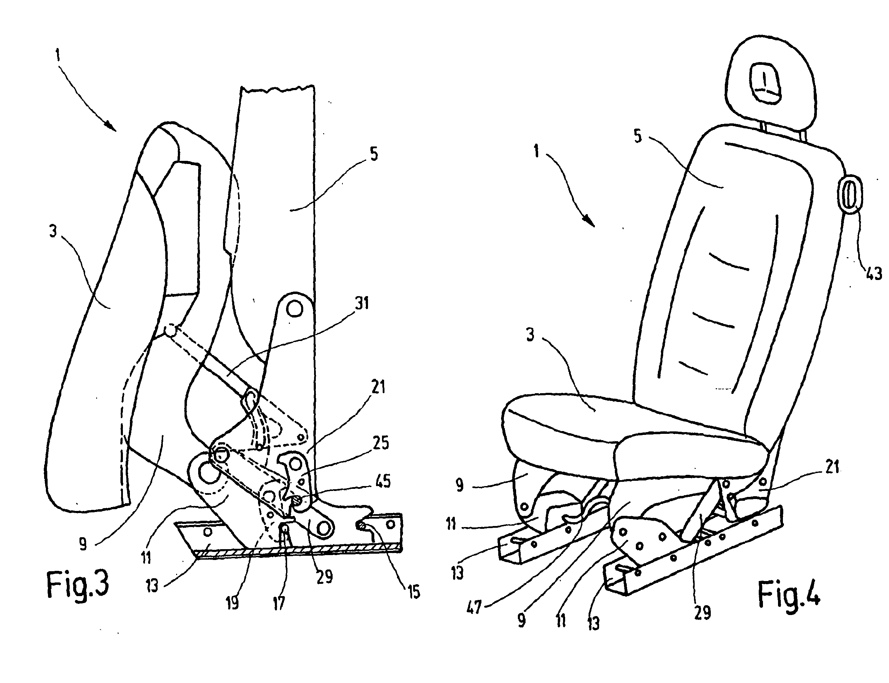

- Fig. 3: eine Fig. 1 entsprechende Darstellung in der Packagestellung,
- Fig. 4: eine perspektivische Ansicht des ersten Ausführungsbeispiels in der Sitzstellung,
- Fig. 5A: eine Teilansicht einer ersten Abwandlung des ersten Ausführungsbeispiels,
- Fig. 5B: eine Teilansicht einer zweiten Abwandlung des ersten Ausführungsbeispiels,
- Fig. 5C: eine Teilansicht einer dritten Abwandlung des ersten Ausführungsbeispiels,
- Fig. 5D: eine Teilansicht einer vierten Abwandlung des ersten Ausführungsbeispiels,
- Fig. 6A: eine Teilansicht des zweiten Ausführungsbeispiels,
- Fig. 6B: eine Teilansicht einer ersten Abwandlung des zweiten Ausführungsbeispiels,
- Fig. 6C: eine Teilansicht einer zweiten Abwandlung des zweiten Ausführungsbeispiels,
- Fig. 6D: eine Teilansicht einer dritten Abwandlung des zweiten Ausführungsbeispiels,
- Fig. 6E: eine Teilansicht einer vierten Abwandlung des zweiten Ausführungsbeispiels,

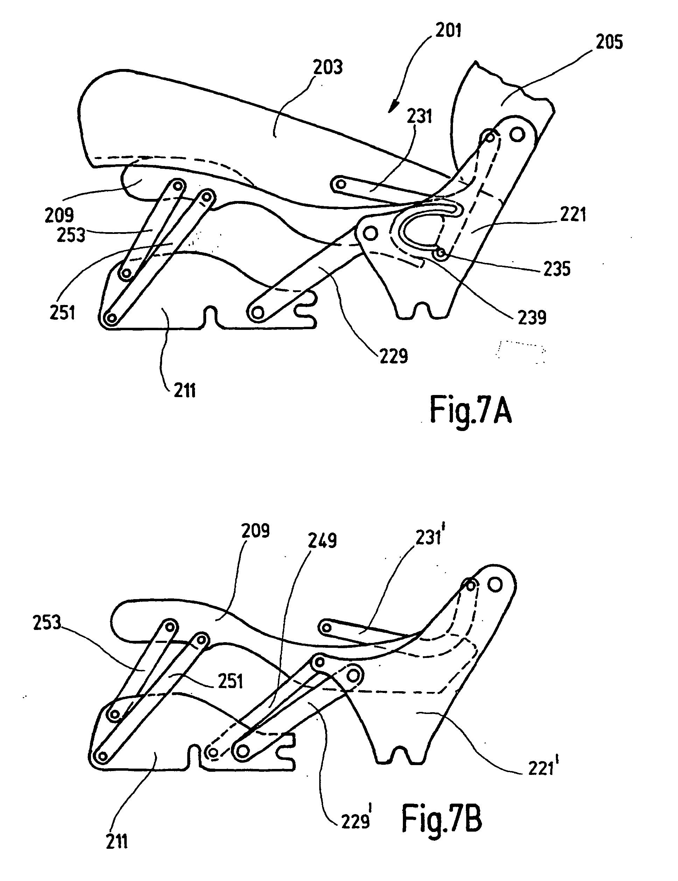

- Fig. 7A: eine Teilansicht des dritten Ausführungsbeispiels in der Sitzstellung, und
- Fig. 7B: eine Teilansicht einer Abwandlung des dritten Ausführungsbeispiels.

Gemäß dem ersten Ausführungsbeispiel weist ein Fahrzeugsitz 1 für den Fond eines Kraftfahrzeuges, beispielsweise eines Vans, ein Sitzkissen 3 und eine Rückenlehne 5 auf. Bei den nachfolgenden Richtungsangaben wird davon ausgegangen, daß die Rückenlehne 5 in Vorwärtsfahrtrichtung hinter dem Sitzkissen 3 angeordnet ist. Das Sitzkissen 3 ist mit einem Sitzkissenträger 9 versehen, an welchem in seinem vorderen Endbereich auf beiden Seiten des im wesentlichen symmetrischen Fahrzeugsitzes 1 je ein vorderer Fuß 11 außenseitig angelenkt ist, wobei die dadurch definierten Schwenkachsen miteinander fluchten. Im folgenden wird der Einfachheit halber nur die linke Fahrzeugsitzseite beschrieben, und zwar zunächst in der zur Personenbeförderung geeigneten Sitzstellung des Fahrzeugsitzes 1.

Der vordere Fuß 11 ist mit seinem unteren Teil in einer in Fahrzeug- und Sitzlängsrichtung ausgerichteten, fahrzeugstukturfesten Schiene 13 angeordnet, nach hinten über einen in Sitzquerrichtung ausgerichteten, schienenfesten, mittleren Schienenbolzen 15 geschoben, von oben über einen in Sitzquerrichtung ausgerichteten, schienenfesten, vorderen Schienenbolzen 17 geschoben und mittels einer am vorderen Fuß 11 angelenkten, vorderen Klinke 19 lösbar verriegelt, welche am vorderen Schienenbolzen 17 federbelastet einhakt. Der vordere Schienenbolzen 17 ist dabei in Längsrichtung hinter der Anlenkstelle zwischen vorderem Fuß 11 und Sitzkissenträger 9 angeordnet.

Ein hinterer Fuß 21 ist mit seinem unteren Teil von oben her über einen in Sitzquerrichtung ausgerichteten, schienenfesten, hinteren Schienenbolzen 23 geschoben und mittels einer am hinteren Fuß 21 angelenkten, hinteren Klinke 25 lösbar verriegelt, welche am hinteren Schienenbolzen 23 federbelastet einhakt. Am oberen Teil des hinteren Fußes 21 ist die Rückenlehne 5 angebracht, beispielsweise mittels Gelenkbeschlägen zur Neigungseinstellung. Eine erste Koppel 29 ist als Lenker einerseits am hinteren Fuß 21 auf dessen Innenseite und andererseits am vorderen Fuß 11 auf dessen Außenseite angelenkt. Eine zweite Koppel 31 ist einerseits am Sitzkissenträger 9 innenseitig und andererseits am hinteren Fuß 21 auf dessen Innenseite angelenkt. Der Sitzkissenträger 9, die vorderen und hinteren Füße 11 bzw. 21 und die Koppeln 29 und 31 bilden ein gelenkig ausgebildetes Sitzgestell des Fahrzeugsitzes 1.

Die zweite Koppel 31 ist an ihrem am hinteren Fuß 21 angelenkten Ende mit einem Arm 33 versehen, welcher in der Sitzstellung nach vorne und leicht nach unten weist. Der Arm 33 trägt einen Kulissenstein 35, vorzugsweise einen in Sitzquerrichtung ausgerichteten Zapfen. Die erste Koppel 29 ist im Bereich ihres am hinteren Fuß 21 angelenkten Endes mit einem in der Sitzstellung nach hinten weisenden Kulissenarm 37 versehen, welcher eine seitlich geöffnete, schlitzförmige Kulisse 39 aufweist. Der Kulissenstein 35 der zweiten Koppel 31 greift in die Kulisse 39 der ersten Koppel 29 in der Art einer Schlitz-Zapfen-Führung ein. Eine Gasfeder 41 ist einerseits am vorderen Fuß 11 und andererseits am Sitzkissenträger 9 angelenkt, und zwar jeweils in deren hinteren Bereichen.

Zum Übergang in die Packagestellung wird mittels eines an der Rückenlehne 5, vorzugsweise im Bereich von deren Oberkante angebrachten Bedienelement 43 die hintere Klinke 25 entriegelt. Die Gasfeder 41 drückt nun den Sitzkissenträger 9 mit dem Sitzkissen 3 so nach oben, daß dieser eine Schwenkbewegung nach vorne mit der Anlenkstelle am vorderen Fuß 11 als Drehachse vollführt. Der hintere Fuß 21 wird über die zweite Koppel 31 nach vorne gezogen, wobei die erste Koppel 29 als Schwenkarm dient. Dabei bewegt sich der Kulissenstein 35 der zweiten Koppel 31 innerhalb der Kulisse 39 der ersten Koppel 29, wodurch die Vorwärtsbewegung des hinteren Fußes 21 definiert wird. Durch die Vorwärtsbewegung des hinteren Fußes 21 wird die Rückenlehne 5 nach vorne versetzt.

Bei dieser Versatzbewegung der Rückenlehne 5 bleibt die Neigung der Rückenlehne 5 zumindest näherungsweise unverändert, während die Anlenkstelle des hinteren Fußes 21 an der ersten Koppel 29 eine Schwenkbewegung nach vorne durchführt. Die Steuerung über die Kulissenführung zwischen den Koppeln 29 und 31 bewirkt nicht nur, daß der gesamte kinematische Mechanismus nur einen Freiheitsgrad besitzt, also mit einer Hand bedienbar ist, sondern auch einen Toleranzausgleich zu den Schienenbolzen in der Schiene 13.

Am vorderen Fuß 11 ist oberhalb der Aufnahme für den vorderen Schienenbolzen 17 und leicht nach hinten versetzt ein Sicherungsbolzen 45 vorgesehen, der vom vorderen Fuß 11 in Sitzquerrichtung seitlich nach außen absteht. Die Packagestellung ist erreicht, wenn der hintere Fuß 21 auf dem Sicherungsbolzen 45 aufsitzt und die hintere Klinke 25 selbsttätig am Sicherungsbolzen 45 einhakt. Die Packagestellung ist dadurch automatisch gesichert, was den Schutz vor Ladung erhöht. Im Bedarfsfall kann der Fahrzeugsitz 1 auch aus dem Kraftfahrzeug entnommen werden. Hierzu werden mittels eines zwischen beiden vorderen Füßen 11 verlaufenden Entriegelungsbügels 47 die beiden vorderen Klinken 19 entriegelt, so daß die Doppelbolzenverriegelung der beiden vorderen Füße 11 gelöst ist. Die automatische Sicherung der Packagestellung ist hiervon unabhängig.

Zum Zurückschwenken in die Sitzstellung wird durch das Bedienelement 43 die automatische Packagesicherung entriegelt, d.h. die hintere Klinke 25 löst sich vom Sicherungsbolzen 45. Durch Druck auf das Sitzkissen 3 oder Zug an der Rückenlehne 5 nach hinten werden gleichzeitig das Sitzkissen 3 nach unten geklappt und die Rückenlehne 5 nach hinten versetzt. Aufgrund der Koppeln 29 und 31 und deren Kulissenführung kann auch diese Bewegung mit einer Hand durchgeführt werden. Bei Erreichen der Sitzstellung fällt die hintere Klinke 25 zur Sicherung wieder am hinteren Schienenbolzen 23 ein.

In der beschriebenen Ausführung sind die Bolzen zur Anbindung des Fahrzeugsitzes 1 am Fahrzeugboden in einer fahrzeugstrukturfesten Schiene 13 vorgesehen. Um mehrere verschiedene Sitzlängspositionen zur Verfügung zu haben, können mehrere, geeignet beabstandete Bolzen in Längsrichtung der Schiene 13 vorhanden sein. In einer Variante sind die Bolzen zur Anbindung an einer Oberschiene eines Sitzschienenpaares vorgesehen, welche in einer fahrzeugstrukturfesten Unterschiene gleitend geführt ist. Damit lassen sich verschiedenste Sitzlängspositionen einstellen.

Im folgenden sind vier Abwandlungen des ersten Ausführungsbeispiels beschrieben, welche sich hinsichtlich der in der Zeichnung dargestellten Ausbildung der Schlitz-Zapfen-Führung vom ersten Ausführungsbeispiel unterscheiden, ansonsten aber mit diesem übereinstimmen, insbesondere hinsichtlich der Funktionsweise. Gleiche Bauteile sind daher mit gleichen Bezugszeichen und abgewandelte Bauteile mit Bezugszeichen mit Apostrophen versehen.

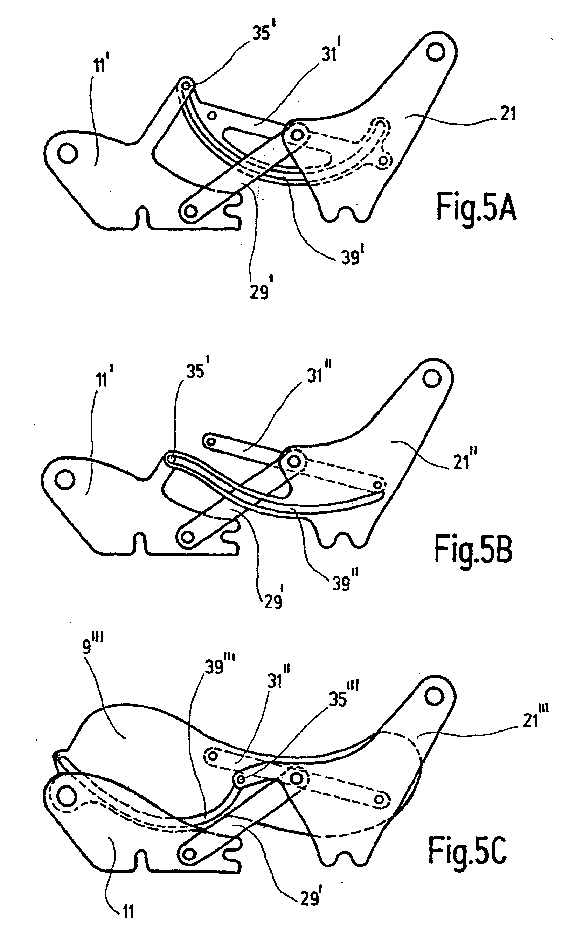

In einer ersten Abwandlung gemäß Fig. 5A ist die zwischen dem vorderen Fuß 11' und dem hinteren Fuß 21 wirkende erste Koppel 29' in gestreckter Form ausgebildet, während die zwischen dem Sitzkissenträger 9 und dem hinteren Fuß 21 vorgesehene zweite Koppel 31' eine gekrümmte Kulisse 39' trägt. In diese gekrümmte Kulisse 39' greift ein Kulissenstein 35' des vorderen Fußes 11' ein. In einer zweiten Abwandlung gemäß Fig. 5B sind sowohl die erste als auch die zweite Koppel 29' bzw. 31" in gestreckter Form ausgebildet. Am vorderen Fuß 11' ist ein Kulissenstein 35' vorgesehen, welchen eine Kulisse 39" des hinteren Fußes 21" führt.

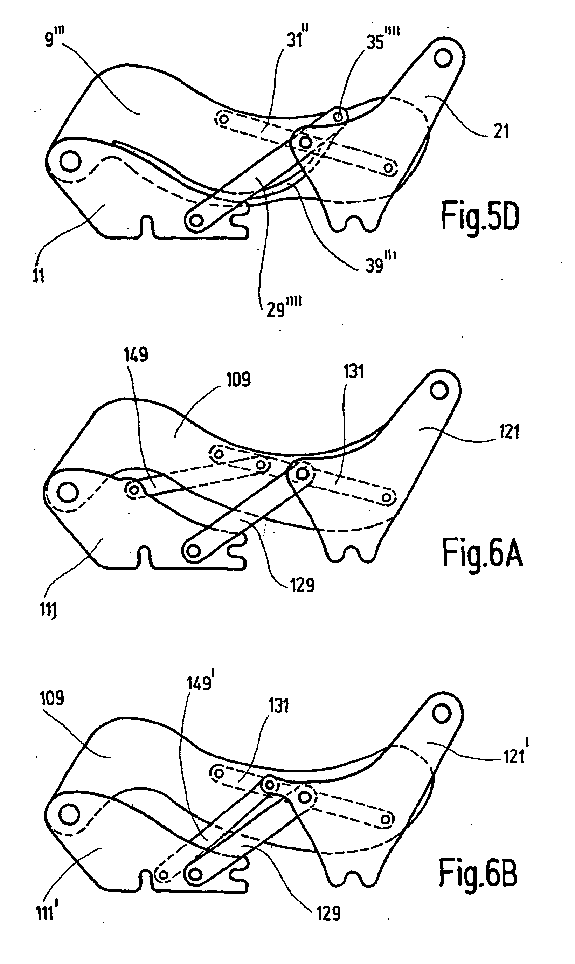

In einer dritten Abwandlung gemäß Fig. 5C stimmt der vordere Fuß 11 mit dem ersten Ausführungsbeispiel und die beiden Koppeln 29' und 31"' mit der zweiten Abwandlung überein. Am hinteren Fuß 21"' ist ein Kulissenstein 35"' angebracht, welcher in eine Kulisse 39"' des Sitzkissenträgers 9"' greift. In einer vierten Abwandlung gemäß Fig. 5D stimmen die Füße 11 und 21 mit dem ersten Ausführungsbeispiel und der Sitzkissenträger 9"' samt Kulisse 39"' und zweiter Koppel 31" mit der dritten Abwandlung überein. Der von der Kulisse 39"' geführte Kulissenstein 35"" ist am oberen Ende der ersten Koppel 29"" angebracht.

Das zweite Ausführungsbeispiel stimmt wiederum weitgehend mit dem ersten Ausführungsbeispiel überein, insbesondere hinsichtlich der Funktionsweise und der Anbindung an die Fahrzeugstruktur, sofern es nicht nachfolgend abweichend beschrieben ist. Gleiche und gleichwirkende Bauteile tragen daher um 100 höhere Bezugszeichen. Der Sitzkissenträger 109 ist vorne am vorderen Fuß 111 angelenkt. Der die Rückenlehne tragende hintere Fuß 121 ist mittels der ersten Koppel 129 am vorderen Fuß 111 angelenkt. Die zweite Koppel 131 zwischen dem Sitzkissenträger 109 und dem hinteren Fuß 121 zieht beim Übergang in die Packagestellung den hinteren Fuß 121 nach vorne. Die Bewegung des hinteren Fußes 121 wird im Gegensatz zum ersten Ausführungsbeispiel und seinen Abwandlungen nicht durch eine Schlitz-Zapfen-Führung definiert, sondern durch eine dritte Koppel 149, welche am vorderen Fuß 111 und an der zweiten Koppel 131 angelenkt ist. Die Herstellung der einzelnen Bauteile vereinfacht sich dadurch.

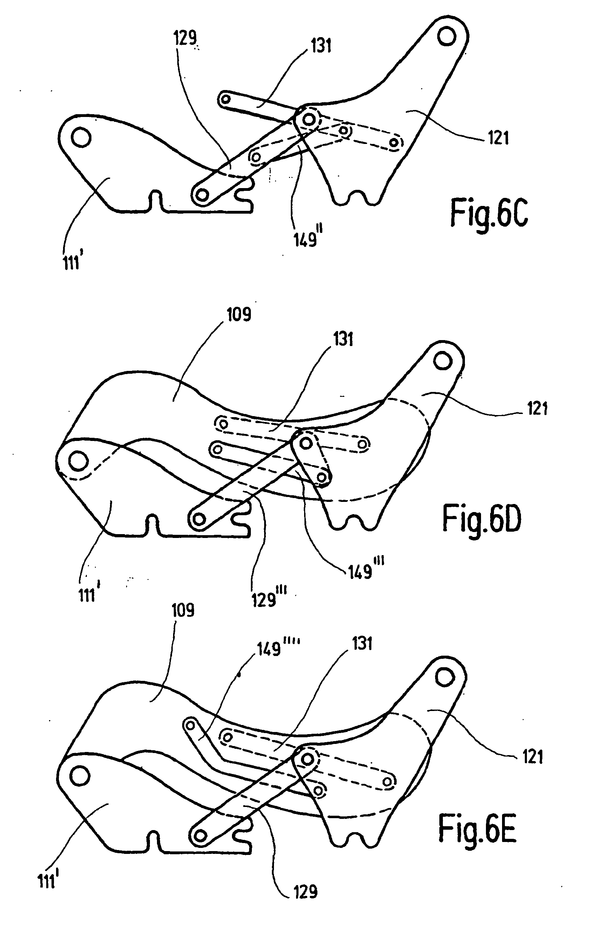

In den nachfolgend beschriebenen Abwandlungen zu diesem zweiten Ausführungsbeispiel tragen die abgewandelten Bauteile Bezugszeichen mit Apostrophen. In einer ersten Abwandlung gemäß Fig. 6B ist die dritte Koppel 149' zwischen dem vorderen Fuß 111' und dem hinteren Fuß 121' vorgesehen, so daß die dritte Koppel 149' zusammen mit der ersten Koppel 129 und den beiden Füße 111' und 121' ein Viergelenk bildet. In einer zweiten Abwandlung gemäß Fig. 6C wirkt die dritte Koppel 149" zwischen der ersten Koppel 129 und der zweiten Koppel 131. In einer dritten Abwandlung gemäß Fig. 6D ist an der ersten Koppel 129 "' ein Arm angeformt, an welchem die dritte Koppel 149"' mit einem Ende angelenkt ist. Mit ihrem anderen Ende ist die dritte Koppel 149"' am Sitzkissenträger 109 angelenkt. In einer vierten Abwandlung gemäß Fig. 6E ist die dritte Koppel 149"' am Sitzkissenträger 109 und am hinteren Fuß 121 angelenkt.

Das dritte Ausführungsbeispiel stimmt wiederum weitgehend mit dem ersten Ausführungsbeispiel überein, insbesondere hinsichtlich der Funktionsweise beim Übergang in die Packagestellung und der Anbindung an die Fahrzeugstruktur, sofern es nicht nachfolgend abweichend beschrieben ist. Gleiche und gleichwirkende Bauteile tragen daher um 200 höhere Bezugszeichen. Der Fahrzeugsitz 201 mit seinem Sitzkissen 203 auf dem Sitzkissenträger 209 und seiner Rückenlehne 205 ist ebenfalls auf jeder Seite mit einem vorderen Fuß 211 und einem hinteren Fuß 221 versehen. Eine erste Koppel 229, welche an den beiden Füßen 211 und 221 angelenkt ist, weist am oberen Ende eine Kulisse 239 auf, in welcher ein Kulissenstein 235 einer T-förmigen zweiten Koppel 231 geführt ist. Die zweite Koppel 231 wirkt zwischen dem Sitzkissen 203 und der Rückenlehne 205.

Zusätzlich zu den zuvor beschriebenen Ausführungen ist zwischen dem vorderen Ende des Sitzkissenträgers 209 und dem vorderen Fuß 211 zum einen eine tragende Lastkoppel 251 und zum anderen dazu nach oben versetzt eine Steuerkoppel 253 angelenkt, d.h. der Sitzkissenträger 209 ist mittels eines Viergelenks angelenkt. Hinsichtlich der Packagestellung wirken die Bauteile im wesentlichen wie im ersten Ausführungsbeispiel zusammen. Zusätzlich kann der Fahrzeugsitz 201 in eine Bodenstellung (Flat-Floor-Position) abgesenkt werden. Wird die Rückenlehne 205 nach vorne in eine flache Stellung geschwenkt, so drückt sie über die zweite Koppel 231 das Sitzkissen 203 nach unten. Der Sitzkissenträger 209 kann durch die viergelenkige Anlenkung an den vorderen Fuß 211 abgesenkt werden.

In einer Abwandlung hierzu wird die Bewegung des hinteren Fußes 221' nicht durch eine Schlitz-Zapfen-Führung definiert. Wie im zweiten Ausführungsbeispiel und seinen Abwandlungen ist im Bereich des hinteren Fußes 221' eine dritte Koppel 249 vorgesehen, die wie in der ersten Abwandlung des zweiten Ausführungsbeispiels zwischen dem vorderen Fuß 211 und dem hinteren Fuß 221' angelenkt ist. Zusammen mit der ersten Koppel 229 bildet sie gleichfalls ein Viergelenk. Die L-förmige, zweite Koppel 231' zwischen dem Sitzkissen und der Rückenlehne ist gegenüber dem dritten Ausführungsbeispiel einfacher ausgebildet.

### Bezugszeichenliste

- 1, 201: Fahrzeugsitz
- 3, 203: Sitzkissen
- 5,205: Rückenlehne
- 9, 9"', 109, 209: Sitzkissenträger
- 11,11', 111, 111', 211: vorderer Fuß
- 13: Schiene
- 15: mittlerer Schienenbolzen
- 17: vorderer Schienenbolzen
- 19: vordere Klinke
- 21, 21", 21'", 121, 121', 221, 221': hinterer Fuß
- 23: hinterer Schienenbolzen
- 25: hintere Klinke
- 29, 29', 29"", 129, 229: erste Koppel
- 31,31', 31", 131,231,231': zweite Koppel
- 33: Arm
- 35, 35', 35'", 35"", 235: Kulissenstein
- 37: Kulissenarm
- 39, 39', 39", 39"', 239: Kulisse
- 41: Gasfeder
- 43: Bedienelement
- 45: Sicherungsbolzen
- 47: Entriegelungsbügel
- 149, 149', 149", 149"', 149"", 249: dritte Koppel
- 251: Lastkoppel
- 253: Steuerkoppel

## Patentansprüche

1. Fahrzeugsitz, insbesondere Kraftfahrzeugsitz, der zwischen wenigstens einer zur Personenbeförderung geeigneten Sitzstellung und einer zusammengeklappten Packagestellung einstellbar ist, mit
a) einem gelenkigen Sitzgestell (9, 11, 21, 29, 31) mit vorderen Füßen (11; 11'; 111; 111'; 211) und hinteren Füßen (21; 21"; 21"'; 121; 121'; 221), welche lösbar an der Fahrzeugstruktur zu befestigen sind,
b) einem Sitzkissen (3; 203), welches mit einem Sitzkissenträger (9; 9"'; 109; 209) versehen ist, der an den vorderen Füßen (11; 11'; 111; 111'; 211) angelenkt ist, wobei das Sitzkissen (3; 203) beim Übergang von der Sitzstellung in die Packagestellung mit einer Schwenkbewegung hochklappt, während die vorderen Füße (11; 11'; 111; 111'; 211) unbewegt bleiben,
c) einer Rückenlehne (5; 205), die zum Übergang von der Sitzstellung in die Packagestellung nach dem Lösen der in ihrem Bereich vorhandenen hinteren Füße (21; 21"; 21"'; 121; 121'; 221) eine Versatzbewegung vollführt, wobei die Rückenlehne (5; 205) in der Packagestellung hinter dem hochgeklappten Sitzkissen (3; 203) angeordnet ist, und
d) Kopplungsmitteln (29, 31; 29', 31'; 31"; 29""; 129, 129"', 131, 149; 149'; 149"; 149"'; 149""; 229, 231; 229', 231', 249, 251, 253) mit ersten und zweiten Koppeln (29, 31; 29', 31'; 31"; 29""; 129, 131; 129'"; 229, 231; 229', 231'), mit denen die Bewegungen der Rückenlehne (5; 205) und des Sitzkissens (3; 203) zwischen der Sitzstellung und der Packagestellung gekoppelt sind,
**dadurch gekennzeichnet, dass**
e) die erste Koppel (29; 29'; 29""; 129, 229; 229') einerseits am hinteren Fuß (21; 21"; 21"'; 121; 121'; 221) und andererseits am vorderen Fuß (11; 11'; 111; 111'; 211) angelenkt ist, wobei bei der Versatzbewegung der Rückenlehne (5; 205) in Richtung des Sitzkissens (3; 203) die erste Koppel (29; 29'; 29""; 129, 229; 229') als Schwenkarm des hinteren Fußes (21; 21"; 21"'; 121; 121') dient,
f) die zweite Koppel (31; 31'; 31"; 131; 231; 231') einerseits am Sitzkissenträger (9; 9"'; 109) und andererseits am hinteren Fuß (21; 21"; 21"; 121; 121') angelenkt ist oder zwischen Sitzkissen (203) und Rückenlehne (205) wirkt, und
g) der Sitzkissenträger (9; 9"; 109; 209) in seinem vorderen Endbereich an den vorderen Füßen (11; 11'; 111; 111; 211) angelenkt ist.

2. Fahrzeugsitz nach Anspruch 1, **dadurch gekennzeichnet, dass** das Sitzkissen (3; 203) während der Versatzbewegung der Rückenlehne (5; 205) mit besagter Schwenkbewegung um die Anlenkstelle im vorderen Endbereich des Sitzkissenträgers (9; 9"'; 109; 209) als Drehachse hochklappt, wobei die Flächen von Sitzkissen (3; 203) und Rückenlehne (5; 205), welche in der Sitzstellung dem Benutzer zugewandt sind, in der Packagestellung zumindest näherungsweise in die gleiche Richtung weisen.

3. Fahrzeugsitz nach Anspruch 1 oder 2, **dadurch gekennzeichnet, dass** die zweite Koppel (31; 31'; 31"; 131; 231; 231') bei der Versatzbewegung der Rückenlehne (5; 205) den hinteren Fuß (21; 21 "; 21'"; 121; 121') nach vorne zieht.

4. Fahrzeugsitz nach einem der Ansprüche 1 bis 3, **dadurch gekennzeichnet, dass** die Rückenlehne (205) nach vorne in eine flache Stellung schwenkbar ist, wobei sie über die zwischen Sitzkissen (203) und Rückenlehne (205) wirkende zweite Koppel (231; 231') das Sitzkissen (203) nach unten drückt.

5. Fahrzeugsitz nach einem der Ansprüche 1 bis 4, **dadurch gekennzeichnet, daß** die Kopplungsmittel (29, 31; 29', 31'; 32"; 29""; 129, 129"', 131, 149; 149'; 149"; 149"'; 149""; 229, 231; 229', 231', 249) eine Schlitz-Zapfen-Führung (35, 39; 35', 39'; 39"; 35"', 39"'; 35""; 235, 239) aufweisen.

6. Fahrzeugsitz nach einem der Ansprüche 1 bis 5, **dadurch gekennzeichnet, daß** die vorderen Füße (11; 11'; 111; 111'; 211) und die hinteren Füße (21; 21"; 21"'; 121; 121'; 221) in verschiedenen Sitzlängspositionen des Fahrzeugsitzes (1; 201) mit der Fahrzeugstruktur verbindbar sind, und daß der Fahrzeugsitz (1; 201) nach Lösen aller Füße (11, 21; 11';21";21"'; 111, 121; 111', 121'; 211, 221) wahlweise vollständig entnehmbar ist.

7. Fahrzeugsitz nach einem der Ansprüche 1 bis 6, **dadurch gekennzeichnet, daß** eine Gasfeder (41) vorgesehen ist, welche die Schwenkbewegung des Sitzkissens (3; 203) unterstützt.

8. Fahrzeugsitz nach einem der Ansprüche 1 bis 7, **dadurch gekennzeichnet, daß** die hinteren Füße (21; 21"; 21"'; 121; 121'; 221) Befestigungsmittel (25) aufweisen, welche sowohl zum Befestigen der hinteren Füße (21; 21"; 21"'; 121; 121'; 221) an der Fahrzeugstruktur als auch zur Sicherung (25, 45) der Packagestellung des Fahrzeugsitzes (1; 201) durch Festlegen desselben dienen.

9. Fahrzeugsitz nach einem der Ansprüche 1 bis 8, **dadurch gekennzeichnet, daß** in der Packagestellung die hinteren Füße (21; 21"; 21"'; 121; 121'; 221) mit den vorderen Füßen (11;11';111;111';211) verriegelbar sind.

10. Fahrzeugsitz nach einem der Ansprüche 1 bis 9, **dadurch gekennzeichnet, daß** ein einziges Bedienelement (43) zur Auslösung des Übergang in die Packagestellung und zur Auslösung der Rückkehr in die Sitzstellung vorgesehen ist.

## Claims

1. Vehicle seat, in particular a motor vehicle seat, which is adjustable between at least one seat position suitable for transporting a passenger and a folded-away package stowing position, comprising:
a) an articulated seat frame (9, 11, 21, 29, 31) with front feet (11; 11'; 111; 111'; 211) and rear feet (21; 21"; 21"'; 121; 121'; 221) which are to be fastened releasably to the vehicle structure,
b) a seat cushion (3; 203) provided with a seat cushion support (9; 9"'; 109; 209) which is hinged at the front feet (11; 11'; 111; 111'; 211), the seat cushion (3; 203) folding up with a pivoting movement during the transfer from the seat position into the package position, while the front feet (11; 11'; 111; 111'; 211) remain stationary,
c) a backrest (5; 205) which during the transfer from the seat position into the package positon executes a shifting movement once the rear feet (21; 21"; 21"'; 121; 121'; 221) provided in the region of the backrest have been released, the backrest (5; 205) being arranged behind the upward-folded seat cushion (3; 203) when in the package position, and
d) coupling means (29, 31; 29', 31'; 29""; 129, 129"', 131, 149; 149'; 149"; 149"'; 149"", 229, 231; 229', 231', 249, 251, 253) with the first and second couplers (29, 31; 29', 31'; 31"; 29"", 129, 131; 129"'; 229, 231; 229', 231') by which the movement of the backrest (5; 205) and the seat cushion (3; 203) are coupled between the seat postion and the package position,
**characterised in that**
e) the first coupler (29; 29'; 29""; 129, 229; 229') is hinged on the one hand at the rear foot (21; 21"; 21"'; 121; 121'; 221) and on the other hand at the front foot (11; 11'; 111; 111'; 211), and during the movement that shifts the backrest (5; 205) towards the seat cushion (3; 203) the first coupler (29; 29'; 29""; 129, 229; 229') serves as a pivot arm of the rear foot (21; 21"; 21"'; 121; 121'),
f) the second coupler (31; 31'; 31"; 131; 231; 231') is hinged on the one hand at the seat cushion support (9; 9"'; 109) and on the other hand at the rear foot (21; 21"; 21"'; 121; 121') or is acting between the seat cushion (203) and the backrest (205), and
g) the seat cushion support (9; 9"'; 109; 209) is hinged at the front feet (11; 11'; 111; 111'; 211) in its forward end region.

2. Vehicle seat according to claim 1, **characterised in that** the seat cushion (3, 203) folds upwards about the articulation point in the forward end region of the seat cushion support (9; 9"'; 109; 209) as a rotation axis with the said pivoting motion during the movement that shifts the backrest (5; 205), and the surfaces of the seat cushion (3; 203) and backrest (5;205), which face the user in the seat position, point at least approximately in the same direction when in the package position.

3. Vehicle seat according to claim 1 or 2, **characterised in that** the second coupler (31; 31'; 31"; 131; 231; 231') pulls the rear foot (21; 21"; 21"'; 121; 121') forwards during the movement that shifts the backrest (5; 205).

4. Vehicle seat according to any of claims 1 to 3, **characterised in that** the backrest (205) can be pivoted forward into a flat position, pushing the seat cushion (203) downwards via the second coupler (231; 231') acting between the seat cushion (203) and the backrest (205).

5. Vehicle seat according to any of claims 1 to 4, **characterised in that** the coupling means (29, 31; 29'; 31'; 32"; 29""; 129, 129"', 131, 149; 149'; 149"; 149"'; 149""; 229, 231; 229', 231', 249) comprise a slot and tenon guide (35, 39; 35', 39'; 39"; 35"', 39"'; 35""; 235, 239).

6. Vehicle seat according to any of claims 1 to 5, **characterised in that** the front feet (11; 11'; 111; 111'; 211) and the rear feet (21; 21"; 21"'; 121; 121'; 221) can be connected to the vehicle structure in various longitudinal seat positions of the vehicle seat (1; 201), and that the vehicle seat (1; 201) can optionally be removed altogether after releasing all the feet (11, 21; 11'; 21 "; 21"'; 111, 121; 111', 121'; 211, 221).

7. Vehicle seat according to any of claims 1 to 6, **characterised by** the provision of a pneumatic spring (41) which assists the pivoting movement of the seat cushion (3; 203).

8. Vehicle seat according to any of claims 1 to 7, **characterised in that** the rear feet (21; 21"; 21"'; 121; 121'; 221) have fastening means (25) which are used both to attach the rear feet (21; 21"; 21"'; 121; 121'; 221) to the vehicle seat (1; 201) by locating said seat.

9. Vehicle seat according to any of claims 1 to 8, **characterised in that** in the package position the rear feet (21; 21"; 21"'; 121; 121'; 221) can be locked to the front feet (11; 11'; 111; 111'; 211).

10. Vehicle seat according to any of claims 1 to 9, **characterised by** the provision of a single operating element (43) for initiating the transfer into the package position and for initiating the return into the seat position.

## Revendications

1. Siège de véhicule, en particulier siège de véhicule automobile qui peut être réglé entre au moins une position d'assise appropriée pour le transport de personnes et une position de charge repliée, comprenant
a) une carcasse de siège articulée (9, 11, 21, 29, 31) possédant des pieds avant (11; 11'; 111; 111'; 211) et des pieds arrière (2 1; 21"; 21"'; 121; 121'; 221) qui sont destinés à être fixés à la structure du véhicule de façon détachable,
b) un coussin d'assise (3; 203) qui est muni d'un support de coussin d'assise (9; 99"'; 109; 209) qui est articulé aux pieds avant (11; 11'; 111; 111'; 211), le coussin d'assise (3; 203) étant redressé par un mouvement de pivotement lors du passage de la position d'assise à la position de charge tandis que les pieds avant (11; 11'; 111; 111'; 211) restent non déplacés,
c) un dossier (5; 205) qui, lors du passage de la position d'assise à la position de charge, après le déblocage des pieds arrière (21; 21"; 21"'; 121; 121'; 221) présents dans sa région, décrit un mouvement de décalage, le dossier (5; 205) étant disposé derrière le coussin d'assise (3; 203) redressé dans la position de charge, et
d) des moyens d'accouplement (29, 31; 29', 31'; 31"; 29""; 129, 129"', 131, 149;149'; 149"; 149"'; 149""; 229, 231; 229', 231', 249, 251, 253) possédant des première et deuxième biellettes (29, 31; 29', 31'; 31"; 29""; 129, 131; 129"'; 229, 231; 229', 231') avec lesquelles les mouvements du dossier (5; 205) et du coussin d'assise (3; 203) entre la position d'assise et la position de charge sont accouplés,
**caractérisé en ce que**
e) la première biellette (29; 29'; 29""; 129, 229; 229') est articulée, d'une part au pied arrière (21;21"; 21"'; 121; 121'; 221) et, d'autre part, au pied avant (11; 11'; 111; 111'; 211), cependant que, lors du mouvement de déplacement du dossier (5; 205) en direction du coussin d'assise (3; 203), la première biellette (29; 29'; 29""; 129, 229; 229') sert de bras pivotant du pied arrière (21; 21"; 21"'; 121; 121'),
f) la deuxième biellette (31; 31'; 31"; 131; 231; 231') est articulée, d'une part, au support de coussin d'assise (9; 9"'; 109) et, d'autre part, à un pied arrière (21; 21"; 21"'; 121; 121'), ou agit entre le coussin d'assise (203) et le dossier (205), et
g) le support de coussin d'assise (9; 9"'; 109; 209) est articulé aux pieds avant (11; 11'; 111; 111'; 211) dans sa région d'extrémité avant.

2. Siège de véhicule selon la revendication 1, **caractérisé en ce que**, pendant le mouvement de déplacement du dossier (5; 205), le coussin d'assise (3; 203) se redresse avec ledit mouvement de pivotement autour de la zone d'articulation dans la région d'extrémité avant du support de coussin d'assise (9; 9"'; 109; 209) en tant qu'axe de rotation, les surfaces du coussin d'assise (3; 203) et du dossier (5; 205) qui sont dirigés vers l'utilisateur dans la position d'assise, pointent au moins approximativement dans la même direction dans la position de charge.

3. Siège de véhicule selon la revendication 1 ou 2, **caractérisé en ce que** la deuxième biellette (31; 31'; 31"; 131; 231; 231') tire le pied arrière (21; 21"; 21"'; 121; 121') vers l'avant lors du mouvement de déplacement du dossier (5; 205).

4. Siège de véhicule selon une des revendications 1 à 3, **caractérisé en ce que** le dossier (205) peut être rabattu vers l'avant dans une position à plat, dans laquelle il repousse le coussin d'assise (203) vers le bas par l'intermédiaire de la deuxième biellette (231; 231') agitent entre le coussin d'assise (203) et le dossier (205),

5. Siège de véhicule selon une des revendications 1 à 4, **caractérisé en ce que** les moyens d'accouplement (29, 31; 29', 31'; 32' ; 29""; 129, 129"', 131, 149; 149'; 149"; 149"'; 149""; 229, 231; 229', 231', 249) présentent un guidage à fente et tourillon (35; 39; 35', 39'; 39"; 35"', 39"'; 35""; 235, 239).

6. Siège de véhicule selon une des revendications 1 à 5, **caractérisé en ce que** les pieds avant (11; 11'; 111; 111'; 211) et les pieds arrière (21; 21"; 21'"; 121; 121'; 221) peuvent être reliés à la structure du véhicule dans différentes positions longitudinales du siège de véhicule (1; 201) et **en ce que** le siège de véhicule (1; 201) peut être sélectivement retiré entièrement après le déblocage de tous les pieds (11, 21; 11'; 21"; 21'"; 111, 121; 111', 121'; 211, 221).

7. Siège de véhicule selon une des revendications 1 à 6, **caractérisé en ce qu'**il est prévu un ressort à gaz (41) qui assiste le mouvement de pivotement du coussin d'assise (3; 203).

8. Siège de véhicule selon une des revendications 1 à 7, **caractérisé en ce que** les pieds arrière (21; 21"; 21"'; 121; 121'; 221) présentent des moyens de fixation (25) qui servent aussi bien pour la fixation des pieds arrière (21; 21"; 21"'; 121; 121'; 221) à la structure du véhicule que pour le blocage (25, 45) de la position de charge du siège de véhicule (1; 201) par immobilisation de ce dernier.

9. Siège de véhicule selon une des revendications 1 à 8, **caractérisé en ce que**, dans la position de charge, les pieds arrière (21; 21"; 21"'; 121; 121'; 221) peuvent être verrouillés avec les pieds avant (11; 11'; 111; 111'; 211).

10. Siège de véhicule selon une des revendications 1 à 9, **caractérisé en ce qu'**un unique élément de manoeuvre (43) est prévu pour déclencher le passage à la position de charge et pour déclencher le retour à la position d'assise.
